# EUROPEAN PATENT APPLICATION

(11) **EP 4 635 809 A1**
(43) Date of publication of application: **22.10.2025**
(21) Application number: 24170438.6
(22) Date of filing: 16.04.2024
(51) Int. Cl.: B60T 17/00, F04B 39/16

(54) **VEHICULAR AIR DRYING UNIT, PNEUMATIC SYSTEM AND VEHICLE**

(71) Applicant: ZF CV Systems Europe BV, 1170 Brüssel (BE)
(72) Inventor: KOPCIUCH, Wojciech, 52-214 Wroclaw (PL)
(74) Representative: Copi, Joachim

(57) **Abstract**

The invention relates to a vehicular air drying unit (10) for drying compressed air in a vehicle (70), in particular in a commercial vehicle (70a), the vehicular air drying unit (10) comprising a compressor port (11) for receiving compressed air from a compressor (40), a supply port (12) for providing dried compressed air to a receiving unit (50), a regeneration port (13) for receiving regeneration air, an exhaust (14) for venting humidified regeneration air, an air drying device (20) comprising a desiccant, the air drying device (20) being operable in a drying mode for drying the received compressed air and in a regeneration mode for regenerating the desiccant with the received regeneration air, the air drying device (20) comprising an input port (21) pneumatically connected or connectable with the compressor port (11) via a compressor line (11a) in the drying mode and pneumatically connected or connectable with the exhaust (14) via an exhaust line (14a) in the regeneration mode, the air drying device (20) comprising an output port (22) pneumatically connected or connectable with the supply port (12) via a supply line (12a) in the drying mode and pneumatically connected or connectable with the regeneration port (13) via a regeneration line (13a) in the regeneration mode, the vehicular air drying unit (10) further comprising a purge valve (30) configured to selectively connect at least one of the input port (21) and the compressor port (11) with the exhaust (14) upon actuation of the purge valve (30), the purge valve (30) comprising a first control port (31) configured to be controlled in coordination with an operating status of the compressor (40) and a second control port (32) configured to be controlled in coordination with the regeneration mode.

## Description

The present disclosure relates to a vehicular air drying unit for drying compressed air in a vehicle, in particular in a commercial vehicle. Furthermore, the present disclosure relates to a pneumatic system for a vehicle. In addition, the present disclosure relates to a vehicle, in particular a commercial vehicle, comprising a pneumatic system.

The vehicular air drying unit may comprise a compressor port for receiving compressed air from a compressor, a supply port for providing dried compressed air to a receiving unit, a regeneration port for receiving regeneration air and an exhaust for venting humidified regeneration air. Furthermore, the vehicular air drying unit may have an air drying device with an input port and an output port, the air drying device comprising a desiccant. The air drying device may be operable in a drying mode for drying the received compressed air and in a regeneration mode for regenerating the desiccant with the received regeneration air. In addition, the vehicular air drying unit may comprise a purge valve configured to selectively connect at least one of the input port and the compressor port with the exhaust upon actuation of the purge valve.

Vehicular air drying units of the afore-mentioned type are generally known. For instance, US 2017/0152875 A1 discloses a compressed air supply installation for operation of an air spring installation of a vehicle, the compressed air supply installation including an air feed with an air compressor configured to supply a compressed air feed with compressed air, a pneumatic main line with an air dryer and a compressed air connection for supplying the pneumatic installation with compressed air, a purge line branching from the pneumatic main line to the compressed air feed and comprising a purge valve connected in the purge line and a purge connection for releasing air to the environment, wherein the purge valve is part of a controllable valve assembly. The controllable valve assembly with the purge valve can be pneumatically loaded with a control pressure derived from the air compressor.

It is also known from general practice to use vehicular air drying units with a purge valve pneumatically controlled by a regeneration signal instead of control pressure derived from the air compressor. Both control concepts may provide simple and reliable purge valve control. Nevertheless, there is still potential to provide improved vehicular air drying unit configurations and controlling concepts for involved purge valves in order to achieve smooth transitions between drying modes and regeneration modes, to obtain precise and efficient exhaust processes and to adequately handle potential side effects such as a pressure build-up in the compressor line, more air drying device exhausting than needed or abrupt compressor line exhaust to the air drying device shortly after compressor deactivation. In practice, these and other side effects may be prevented or minimized by suitable operation conditions such as a minimum regeneration time, a delayed regeneration start or additional purge valve actuations.

In view of the above, it is an object of the present invention to provide a vehicular air drying unit with an improved purge valve arrangement in order to achieve efficient operation and switching processes. It is a further object of the present invention to provide a suitable pneumatic system comprising such a vehicular air drying unit and a vehicle with such a pneumatic system.

Aspects and embodiments of the invention provide a vehicular air drying unit, a pneumatic system and a vehicle as indicated in the appended claims.

According to a first aspect of the present invention, there is provided a vehicular air drying unit for drying compressed air in a vehicle, in particular in a commercial vehicle, the vehicular air drying unit comprising a compressor port for receiving compressed air from a compressor, a supply port for providing dried compressed air to a receiving unit, a regeneration port for receiving regeneration air and an exhaust for venting humidified regeneration air. Furthermore, the vehicular air drying unit comprises an air drying device having a desiccant, wherein the air drying device is operable in a drying mode for drying the received compressed air and in a regeneration mode for regenerating the desiccant with the received regeneration air. The air drying device comprises an input port pneumatically connected or connectable with the compressor port via a compressor line in the drying mode and pneumatically connected or connectable with the exhaust via an exhaust line in the regeneration mode. Furthermore, the air drying device comprises an output port pneumatically connected or connectable with the supply port via a supply line in the drying mode and pneumatically connected or connectable with the regeneration port via a regeneration line in the regeneration mode. In addition, the vehicular air drying unit comprises a purge valve configured to selectively connect at least one of the input port and the compressor port with the exhaust upon actuation of the purge valve, wherein the purge valve comprises a first control port configured to be controlled in coordination with an operating status of the compressor and a second control port configured to be controlled in coordination with the regeneration mode.

In other words, an vehicular air drying unit with a dual control concept for controlling the purge valve of the vehicular air drying unit is provided, using signals representing a compressor status and a regeneration status in a combined manner for refined valve actuation and for switching processes which are both coordinated with the compressor operation and the regeneration timing of the vehicular air drying unit. This may lead to a higher operation efficiency and increased energy efficiency of the vehicular air drying unit. Furthermore, the provided dual control concept allows for well-defined exhaust processes and smooth transitions between regeneration modes and drying modes of the air drying device, thus increasing the lifetime of the vehicular air drying unit and decreasing potential constraints for a connected compressor and for a connected receiving unit, such as a pneumatic brake system or an air suspension system. Side effects such as, for instance, a potential pressure build-up in cut-off lines may be prevented or at least minimized as further explained below with regard to advantageous embodiments of the invention. In this way, adapted operation conditions in order to meet these side effects by, for instance, stretching regeneration time spans may become obsolete over the vehicular air drying unit configurations suggested within the present disclosure.

In accordance with the present disclosure, a vehicular air drying unit may generally be a structural unit implemented in a vehicle for receiving and drying compressed air in order to provide dried compressed air to a recipient. The vehicle may be a motor vehicle of any type designed to transport people and/or cargo. In particular, the vehicle may be a commercial vehicle, i.e. a vehicle used for carrying goods or fare-paying passengers. For instance, the commercial vehicle may be a truck or a bus. At least some, preferably all, of the described components of the vehicular air drying unit may be arranged within a housing of the air drying unit. The vehicular air drying unit may form a module of a higher-level air processing unit which may comprise further air processing peripherals such as a protection valve assembly or air filters. The vehicular air drying unit comprises an air drying device having a desiccant. Depending on a selected desiccant material and its degradation properties, the desiccant may be provided as an exchangeable cartridge. The desiccant may be configured to remove moisture from an airflow flowing through the desiccant by means of an adsorption process. Upon reaching a certain saturation point, it may be necessary to regenerate the desiccant by a suitable desorption process. Generally, regeneration of the desiccant may be performed by leading a dry regeneration airflow through the desiccant. The dry regeneration airflow removes moisture from the desiccant and the humidified regeneration airflow may be vented via the exhaust. Hence, the air drying device is operable in a drying mode for drying the received compressed air and in a regeneration mode for regenerating the desiccant with received regeneration air. The regeneration air may, for instance, be a diverted airflow of dried compressed air led to a suitable buffer space being connectable or connected to the regeneration port. Preferably, the compressor may have at least two operation statuses, for instance, an active status in which the compressor is switched on and an inactive status in which the compressor is switched off. Generally, a compressor connected to the compressor port may be switched on during the drying mode and it may be switched off during the regeneration mode. Nevertheless, a time offset may occur between the start or end of a regeneration mode and a compressor switching process.

As indicated above, the vehicular air drying unit comprises a purge valve configured to selectively connect at least one of the input port and the compressor port with the exhaust upon actuation of the purge valve. In accordance with the present disclosure, actuation of the purge valve may be regarded as a change of the state of the purge valve to a purging state, in the following also called actuated state, in which pressure being present in the compressor line and/or regeneration air guided through the air drying device may be vented via the exhaust. In contrast, a reset of the purge valve may be regarded as a change of the state of the purge valve to a non-purging state, in which a pneumatic connection to the exhaust may be interrupted. Whereas, according to prior art purge valve control concepts, it may be common to use spring-loaded purge valves for automatic reset of the purge valve upon the absence of a valve-actuating control pressure, the present dual control concept may, for instance, use both a compressor control signal and a regeneration signal in order to maintain or change the state of the purge valve. In accordance with the present disclosure, the first control port may be controlled directly, for instance by a compressor control signal from a compressor control line, or indirectly, for instance by a first control valve configured to control the purge valve via the first control port in accordance with an operating status of the compressor. Furthermore, the second control port may be controlled directly, for instance by a regeneration signal from the regeneration port, or indirectly, for instance by a second control valve configured to control the purge valve via the second control port in accordance with the regeneration mode. Depending on the purge valve configuration, as will be further explained in the following, the purge valve may enter or maintain the actuated state or the reset state depending on a combination of signals being present or absent at the first control port and/or the second control port.

Depending on the configuration of the connected compressor and the compressor control line, the first control port connected to the compressor signal port may receive a compressor control signal in accordance with the operating status of the compressor. In particular, the compressor control signal may be present at the first control port when the compressor is switched off and the compressor control signal may be absent at the first control port when the compressor is switched on. Depending on the configuration of the connected compressor, the compressor control line may, for instance, be a pneumatic line configured to transmit a pressure control signal or the compressor control line may be an electrical line configured to transmit an electrical signal. The second control port connected to the regeneration port may receive a regeneration signal in accordance with a present regeneration mode of the air drying device. The regeneration mode may, for instance, be initiated automatically upon exceeding a predefined pressure value in the buffer space buffering diverted regeneration air or by a dedicated control device. The regeneration signal may start to be present at the second control port when the regeneration mode is started and the regeneration signal may stop to be present at the second control port when the regeneration mode ends.

According to an embodiment of the first aspect of the invention, at least one of the first control port and the second control port may be configured as a pneumatically operated control port. Hence, the compressor control signal and/or the regeneration signal may be pressure signals. Preferably, both the first control port and the second control port may be configured as pneumatically operated control ports. According to an alternative embodiment, the first control port may be an electrically operated control port and the second control port may be a pneumatically operated control port. According to a further alternative embodiment, the first control port may be an pneumatically operated control port and the second control port may be an electrically operated control port. Furthermore, it is also conceivable to implement both the first control port and the second control port as electrically operated control ports. In the following, where applicable, the compressor control signal may be also called compressor control pressure signal and the regeneration signal may be also called regeneration pressure signal, thus indicating a pneumatically operated control port. By means of pneumatically operated first and second control ports, reliable and cost-efficient purge valve control using system-inherent control pressure sources may be provided, thus leading to a compact vehicular air drying unit of reasonable complexity.

According to an embodiment of the first aspect of the invention, the vehicular air drying unit may comprise a compressor signal port for receiving a compressor signal from a compressor control line and the first control port of the purge valve may be connected to the compressor signal port via a compressor signal line. Additionally or alternatively, the second control port may be connected to the regeneration port via the regeneration line. Hence, a direct control of the purge valve using at least one of a compressor control signal from a compressor control line and a regeneration signal being present at the regeneration port may be implemented, thus providing a simple and reliable control concept.

According to an embodiment of the first aspect of the invention, the vehicular air drying unit may comprise a first control valve for controlling the first control port, the first control valve being configured to be actuated by a compressor control signal. Additionally or alternatively, a second control valve may be connected to the second control port, wherein the second control valve may be configured to be actuated by a regeneration signal. The compressor control signal may, for instance, be derived from a compressor control line or from a separate control device. The regeneration signal may, for instance, be derived from the regeneration line or from a separate control device. The first control valve and/or the second control valve may, for instance, be pneumatic valves configured to be actuated by a pressure signal. Alternatively, the first control valve and/or the second control valve may, for instance, be solenoid valves configured to be actuated by an electrical signal. By providing a first control valve and/or a second control valve configured to control the first and/or second control port of the purge valve, a higher flexibility in terms of control concepts may be provided and the controlling equipment may be optimized with regard to individual controlling requirements such as desired response times, robustness or safety aspects.

According to an embodiment of the first aspect of the invention, the purge valve may be configured to be actuated when the second control port is activated. An activated control port may, for instance, be a pressurized control port or a control port supplied with current. In other words, the second control port may be configured to actuate the purge valve by means of a pressure build-up or a current signal at the second control port. Hence, the purge valve may be actuated upon receiving a positive regeneration pressure or current signal at the second control port. A positive regeneration pressure signal may be defined by the presence of control pressure acting on a provided control surface of the purge valve. By means of an actuation of the purge valve by activating the second control port with a regeneration signal, a reliable and precisely timed purge valve actuation may be ensured. In particular, the purge valve will not be actuated when the second control port is not activated, thus preventing excessive exhausting when the compressor is switched off but the regeneration process has not yet started.

According to an embodiment of the first aspect of the invention, the purge valve may be configured to remain in an actuated state when the first control port is activated. In other words, the first control port may be configured to maintain the purge valve actuated by means of a pressure build-up or a current signal at the first control port. Hence, the purge valve may remain actuated upon receiving a positive compressor control pressure or current signal at the first control port. A positive compressor control pressure signal may be defined by the presence of control pressure acting on a provided control surface of the purge valve. As indicated above, the compressor control signal may be present at the first control port when the compressor is switched off. In conclusion, the actuation of the purge valve to enter the purging state may be triggered by receiving a positive regeneration signal upon the start of the regeneration mode, but the actuation will not automatically end when the positive regeneration signal stops to be present at the second control port. In contrast, the purge valve may remain in the purging state as long as the compressor is switched off, independently of an already occurred stop of the regeneration mode. Depending on the configuration of the vehicular air drying unit, this may allow to vent pressure from the compressor line which may build up during the regeneration mode. Hence, it may be ensured that accumulated pressure in the compressor line is vented to the atmosphere. Furthermore, adverse effects on the compressor caused by potential pressure build-up in the compressor line may be prevented. The suggested embodiment may enable beneficial pressure protection for the compressor, the air drying device and a potentially connected pneumatic system, thus leading to increased lifetime of the addressed components.

According to an embodiment of the first aspect of the invention, the purge valve may be configured to be reset when the first control port is deactivated. A deactivated control port may, for instance, be a depressurized control port or a currentless control port. In other words, the purge valve may be configured to be reset by means of a pressure decrease or current drop at the first control port. Hence, the purge valve may be reset upon receiving a negative compressor control pressure or current signal at the first control port. A negative compressor control pressure signal may be defined by the absence of control pressure acting on a provided control surface of the purge valve. As indicated above, the compressor control signal may be absent at the first control port when the compressor is switched on. In conclusion, the purge valve will be reset when the compressor is switched on again, thus leading to a negative compressor control signal at the first control port. In this way, a precisely timed purge valve reset may be ensured.

According to an embodiment of the first aspect of the invention, the purge valve is configured to be reset only when the first control port and the second control port are deactivated. In other words, for the reset of the purge valve, the absence of a positive regeneration signal at the second control port and the presence of a negative compressor control signal at the first control port may be required. By creating a twofactor dependency for the reset of the purge valve, the reset of the purge valve is beneficially coordinated with the regeneration mode and the operating status of the compressor. In this way, smooth and efficient switching processes and an economical operation of the vehicular air drying unit may be ensured.

According to an embodiment of the first aspect of the invention, the purge valve may be arranged in the exhaust line and the purge valve may comprise a closed state, in which it is configured to interrupt the exhaust line, and an open state, in which it is configured to connect at least one of the compressor line and the input port of the air drying device with the exhaust. For instance, the exhaust line may be branched off from the compressor line. The open state of the purge valve may correspond to the actuated state of the purge valve. The closed state of the purge valve may correspond to the reset state of the purge valve. The suggested embodiment allows for simultaneous venting of the compressor line and the air drying device. Furthermore, the suggested vehicular air drying unit configuration has a simple structure and is easy to implement. In combination with at least one of the embodiments illustrated above, the compressor line and the air drying device may stay connected to the exhaust when the regeneration mode is stopped and the compressor is not yet switched on again, thus preventing potential pressure build-up in the compressor line as explained above.

According to a refined embodiment, the purge valve may be configured as a pneumatically operated 2/2 way valve. In this way, a simple and cost-efficient implementation of the purge valve may be provided. For instance, the 2/2 way valve may comprise two states corresponding to the open state and the closed state indicated above. Furthermore, the 2/2 way valve may comprise a first valve port connectable to the exhaust line leading to the compressor line and the input port. In addition, the 2/2 way valve may comprise a second valve port connectable to the exhaust.

According to an embodiment of the first aspect of the invention, the purge valve may be arranged in the compressor line and the purge valve may comprise a compressor-connecting state, in which it is configured to connect the compressor line with the input port of the air drying device, and a compressor-disconnecting state, in which it is configured to disconnect the compressor line from the input port of the air drying device and to connect the input port of the air drying device with the exhaust. The compressor-disconnecting state of the purge valve may correspond to the actuated state of the purge valve. The compressor-connecting state of the purge valve may correspond to the reset state of the purge valve. By means of the suggested embodiment, an advantageous compressor line cut-off function is provided and directly integrated into the purge valve assembly of the vehicular air drying unit. Using the proposed configuration, a clear separation may be provided between the drying mode and the regeneration mode of the air drying device, thus optimizing airflows in both operational modes.

According to a refined embodiment, the purge valve may be configured as a pneumatically operated 3/2 way valve. In this way, a simple and cost-efficient implementation of the purge valve may be provided. For instance, the 3/2 way valve may comprise two states corresponding to the compressor-connecting state and the compressor-disconnecting state indicated above. Furthermore, the 3/2 way valve may comprise a first valve port connectable to the compressor line leading to the compressor. In addition, the 3/2 way valve may comprise a second valve port connectable to the input port of the air drying device. Moreover, the 3/2 way valve may comprise a third valve port connectable to the exhaust.

Generally, the vehicular air drying unit may comprise flow control elements in order to permit, block or optimize flows of dried compressed air and/or regeneration air in individual sections of the vehicular air drying unit. For instance, check valves may be arranged in individual lines of the vehicular air drying unit in order to control flow directions of the dried compressed air and/or the regeneration air. Furthermore, the vehicular air drying unit may comprise additional valves for controlling the regeneration process and/or for compressor switching processes.

According to a second aspect of the present invention, there is provided a pneumatic system for a vehicle, comprising a compressor providing compressed air, a vehicular air drying unit according to any of the above-mentioned features, wherein the vehicular air drying unit is connected or connectable to the compressor via the compressor port, and at least one pneumatic unit connected or connectable to the vehicular air drying unit via the supply port of the vehicular air drying unit. Optionally, the vehicular air drying unit may be furthermore connected or connectable to a compressor control line via a compressor signal port.

With the suggested pneumatic system according to the second aspect of the present invention, a pneumatic system with an enhanced vehicular air drying unit is provided, which may, for instance, lead to higher operation efficiency, increased energy efficiency and a longer lifetime of components of the pneumatic system. Furthermore, the supplied dried air may be provided with high quality to the pneumatic unit due to optimized and finely tuned drying and regeneration processes.

As indicated above, the vehicular air drying unit may comprise a compressor port, a supply port, a regeneration port, an exhaust, optionally a compressor signal port, an air drying device with an input port and an output port, and a purge valve, therefore these components may also form parts of the suggested pneumatic system. In particular, the regeneration port may be connectable or connected to a buffer space for buffering dried air as regeneration air. According to an embodiment, the buffer space may be arranged in a housing of the vehicular air drying unit, thus providing an internal buffer space.

The pneumatic unit may generally be a functional unit using compressed air for pneumatic applications. In particular, the pneumatic unit may be a vehicular pneumatic unit. For instance, the pneumatic unit may be a pneumatic braking unit, an air suspension unit or a tire-inflation unit. By using dried compressed air, moisturebased effects such as, for instance, corrosion or freezing may be prevented with regard to pneumatic unit components guiding the compressed air.

According to a third aspect of the present invention, there is provided a vehicle comprising a pneumatic system according to any of the above-mentioned features. The described vehicle may be a motor vehicle of any type designed to transport people and/or cargo. In particular, the vehicle may be a commercial vehicle, i.e. a vehicle used for carrying goods or fare-paying passengers. For instance, the commercial vehicle may be a truck or a bus. For commercial vehicles, the advantage of an improved pneumatic system comprising a vehicular air drying unit reliably supplying dried air of high quality may significantly raise the operating efficiency of the vehicle, in particular with regard to the major consumption of compressed air compared to non-commercial vehicles. Nevertheless, the invention may generally also be applicable to personal vehicles.

According to an embodiment of the third aspect of the present invention, the at least one pneumatic unit of the pneumatic system may be configured as a pneumatic braking unit, an air suspension unit or a tire-inflation unit. Since these pneumatic units may require a major amount of dried compressed air, it may be ensured by the enhanced pneumatic system to provide dried compressed air to these pneumatic units in a reliable and cost-efficient manner.

The above and other characteristics will become clear from the following description of illustrative, non-restrictive examples, which will be further outlined with reference to the appended drawings. The drawings are not necessarily to scale. Some features could be exaggerated, minimized or hidden to show details of particular components. Therefore, specific structural and functional details disclosed herein are not to be interpreted as limiting, but merely as a representative basis for teaching one skilled in the art.
- Fig. 1: provides a schematical circuit diagram of a vehicular air drying unit according to a first embodiment.
- Fig. 2: provides a schematical circuit diagram of a vehicular air drying unit according to a second embodiment.
- Fig. 3: schematically illustrates a side view of a vehicle comprising a pneumatic system with a vehicular air drying unit.

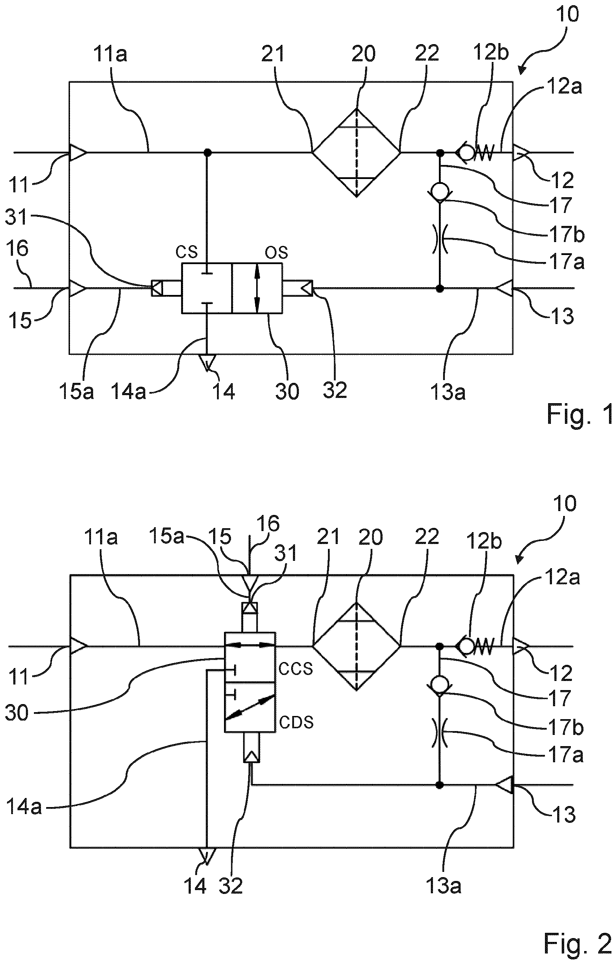

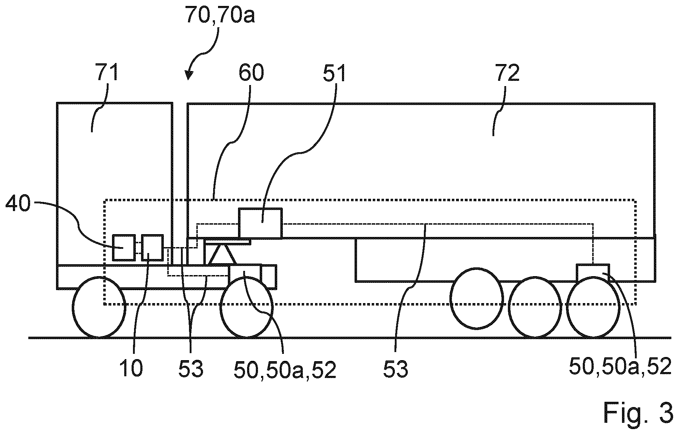

Figs. 1 and 2 schematically illustrate a vehicular air drying unit 10 for drying compressed air according to a first and second embodiment. The vehicular air drying units 10 comprise a compressor port 11 for receiving compressed air from a compressor 40 (see Fig. 3). Furthermore, the vehicular air drying units 10 comprise a supply port 12 for providing dried compressed air to a receiving unit 50 (see Fig. 3). In addition, the vehicular air drying units 10 comprise a regeneration port 13 for receiving regeneration air. Moreover, the vehicular air drying units 10 comprise an exhaust 14 for venting humidified regeneration air to the atmosphere. The vehicular air drying units 10 furthermore comprise a compressor signal port 15 for receiving a compressor signal from a compressor control line 16. For instance, the compressor signal may be a pneumatic or electrical signal.

The vehicular air drying units 10 additionally comprise an air drying device 20 comprising a desiccant, in particular a desiccant cartridge. The air drying device 20 is operable in a drying mode for drying the received compressed air and in a regeneration mode for regenerating the desiccant with the received regeneration air. The regeneration air may be a diverted airflow of dried compressed air led to a suitable buffer space (not shown) in the vehicular air drying unit 10. Each air drying device 20 comprises an input port 21 pneumatically connected (Fig. 1) or connectable (Fig. 2) with the compressor port 11 via a compressor line 11a in the drying mode. In addition, the input port 21 may be pneumatically connectable with the exhaust 14 via an exhaust line 14a in the regeneration mode. Each air drying device 20 furthermore comprises an output port 22 pneumatically connected with the supply port 12 via a supply line 12a in the drying mode. In addition, the output port 22 may be pneumatically connected with the regeneration port 13 via a regeneration line 13a in the regeneration mode.

The vehicular air drying units 10 according to Figs. 1 and 2 comprise a purge valve 30 with a first control port 31 connected to the compressor signal port 15 via a compressor signal line 15a and with a second control port 32 connected to the regeneration port 13 via the regeneration line 13a, thus providing direct control paths between the first control port 31 and the compressor signal port 15 as well as between the second control port 32 and the regeneration port 13. Although not depicted in the drawings, it may also conceivable to provide at least one of a first control valve and a second control valve configured to control the first control port 31 and/or the second control port 32 for indirect control processes.

According to the depicted embodiments, the first control port 31 and the second control port 32 are configured as pneumatically operated control ports, thus providing reliable and cost-efficient purge valve control. Hence, a dual control concept for controlling the purge valve 30 is provided, using a compressor control pressure signal and regeneration pressure signal in a combined manner for refined valve actuation and for switching processes which are both coordinated with the compressor operation and the regeneration timing. In this way, efficient operation and switching processes may be achieved, in particular regarding well-defined exhaust processes to manage potential pressure build-up and to prevent unnecessary energy losses by excessive exhausting, since there may occur a time offset between the regeneration process and the compressor switching process.

According to the embodiments depicted in Figs. 1 and 2, the purge valve 30 comprises an actuated state in which a purging process is enabled and a reset state in which a purging process is blocked. The present dual control concept uses both a compressor control pressure signal and regeneration pressure signal in order to maintain or change the state of the purge valve 30. According to the embodiments illustrated in Figs. 1 and 2, the compressor control pressure signal will be present at the first control port 31 when the compressor 40 is switched off and the compressor control pressure signal will be absent at the first control port 31 when the compressor 40 is switched on. Furthermore, the regeneration pressure signal will be present at the second control port 32 when the air drying device 20 enters the regeneration mode, e.g. by exceeding a predefined pressure value in the buffer space buffering diverted regeneration air, and the regeneration pressure signal will stop to be present at the second control port 32 when the air drying device 20 leaves the regeneration mode.

According to the first and second embodiments illustrated in Figs. 1 and 2, the purge valve 30 is configured to be actuated when the second control port 32 is pressurized, thus providing a reliable and precisely timed valve actuation upon a started regeneration process, wherein the actuation event is independent of a compressor operating status. Furthermore, the purge valve 30 is configured to remain in an actuated state when the first control port 31 is pressurized and to reset when the first control port 31 is depressurized. Hence, accumulated pressure in the compressor lines 11a may be vented until the compressor 40 is activated again, thus providing pressure protection for the compressor 40 and the vehicular air drying unit 10. In particular, the purge valve 30 may be configured to be reset only when the first control port 31 and the second control port 32 are depressurized. In this way, the reset of the purge valve 30 is reliably coordinated with the regeneration mode and the operating status of the compressor 40.

Fig. 1 depicts a vehicular air drying unit 10 according to a first embodiment. As apparent from Fig. 1, the purge valve 30 may be configured to selectively connect the input port 21 and the compressor port 11 with the exhaust 14 upon actuation of the purge valve 30. According to the first embodiment, the purge valve 30 is arranged in the exhaust line 14a. The purge valve 30 comprises a closed state CS, in which it is configured to interrupt the exhaust line 14a, and an open state OS, in which it is configured to connect the compressor line 11a and the input port 21 of the air drying device 20 with the exhaust 14. According to the embodiment illustrated in Fig. 1, the purge valve 30 is configured as a pneumatically operated 2/2 way valve. The state of the purge valve 30 shown in Fig. 1 is the closed state CS, in which the exhaust line 14a is interrupted. Hence, the air drying device 20 may currently be operated in the drying mode according to the conditions depicted in Fig. 1.

The vehicular air drying unit 10 according to the first embodiment illustrated in Fig. 1 allows for simultaneous venting of the compressor line 11a and the air drying device 20. Furthermore, the suggested vehicular air drying unit configuration has a simple structure and is easy to implement. As indicated above, the compressor line 11a and the vehicular air drying unit 10 may stay connected to the exhaust 14 when the regeneration mode is stopped and the compressor 40 is not yet switched on again, thus preventing potential pressure build-up in the compressor line 11a until the compressor 40 is reactivated. In conclusion, possible constraints for the compressor 40, in particular for a compressor clutch of the compressor 40, may be prevented. Furthermore, the vehicular air drying unit 10 may present an increased lifetime and increased energy efficiency.

Fig. 2 depicts a vehicular air drying unit 10 according to a second embodiment. As illustrated in Fig. 2, the purge valve 30 may be configured to selectively connect the input port 21 with the exhaust 14 upon actuation of the purge valve 30. According to the second embodiment, the purge valve 30 is arranged in the compressor line 11a. The purge valve 30 comprises a compressor-connecting state CCS, in which it is configured to connect the compressor line 11a with the input port 21 of the air drying device 20, and a compressor-disconnecting state CDS, in which it is configured to disconnect the compressor line 11a from the input port 21 of the air drying device 20 and to connect the input port 21 of the air drying device 20 with the exhaust 14. According to the embodiment shown in Fig. 2, the purge valve 30 is configured as a pneumatically operated 3/2 way valve. The state of the purge valve 30 shown in Fig. 2 is the compressor-connecting state CCS, in which the compressor line 11a and the input port 21 of the air drying device 20 are connected, whereas a pneumatic connection between the input port 21 and the exhaust 14 is interrupted. Hence, the air drying device 20 may currently be operated in the drying mode according to the conditions depicted in Fig. 2.

The vehicular air drying unit 10 according to the second embodiment illustrated in Fig. 2 allows for a clear separation between the drying mode and the regeneration mode of the air drying device 20, thus optimizing airflows in both operational modes. Furthermore, the vehicular air drying unit 10 may present increased energy efficiency and less constraints for connected pneumatic units 50a such as a pneumatic braking unit 52 (see Fig. 3).

As furthermore apparent in Figs. 1 and 2, the vehicular air drying unit 10 may comprise flow control elements in order to permit, block or optimize flows of dried compressed air and/or regeneration air in individual sections of the vehicular air drying unit 10. For instance, a spring-loaded check valve 12b may be arranged in the supply line 12a in order to prevent a backflow of dried compressed air to the air drying device 20 via the supply line 12a. Furthermore, a branch line 17 branched off from the regeneration line 13a may be used to connect the regeneration port 13 with the output port 22 of the air drying device 20, and the branch line 17 may comprise a throttle 17a in order to expand passing regeneration air for improved water absorbency. In addition, a check valve 17b may be arranged in the branch line 17 in order to prevent dried compressed air of flowing into regeneration line 13 during the drying mode.

Fig. 3 provides a schematic side view of a vehicle 70 configured as a commercial vehicle 70a. According to the embodiment illustrated in Fig. 3, the vehicle 70 is implemented as a truck with a towing unit 71 and a trailer unit 72. The vehicle 70 comprises a pneumatic system 60 comprising a compressor 40, a vehicular air drying unit 10 and pneumatic units 50a forming receiving units 50 for receiving dried compressed air from the vehicular air drying unit 10. According to the illustrated embodiment, the pneumatic units 50a may be configured as pneumatic braking units 52. Alternatively, at least one pneumatic unit 50a may, for instance, be configured as an air suspension unit or a tire-inflation unit.

Furthermore, the pneumatic system 60 comprises a compressed air buffer 51 for buffering dried compressed air supplied by the vehicular air drying unit 10. The pneumatic units 50a and the compressed air buffer 51 may be pneumatically connected to the vehicular air drying unit 10 via compressed air lines 53. The compressor 40 may be connected to the vehicular air drying unit 10 via the compressor port 11 and a compressor control line 16 may be connected to the vehicular air drying unit 10 via the compressor signal port 15 (see Figs. 1 and 2). The pneumatic units 50a may be connected to the vehicular air drying unit 10 via the supply port 12 of the vehicular air drying unit 10 (see Figs. 1 and 2). The vehicular air drying unit 10 may be configured according to at least one of the features described in relation with Figs. 1 and 2, thus beneficially enhancing the vehicular pneumatic system 60 and the vehicle 70 with regard to their compressed air system properties.

List of reference numerals (part of the application):
- 10: vehicular air drying unit
- 11: compressor port
- 11a: compressor line
- 12: supply port
- 12a: supply line
- 12b: spring-loaded check valve
- 13: regeneration port
- 13a: regeneration line
- 14: exhaust
- 14a: exhaust line
- 15: compressor signal port
- 15a: compressor signal line
- 16: compressor control line
- 17: branch line
- 17a: throttle
- 17b: check valve
- 20: air drying device
- 21: input port
- 22: output port
- 30: purge valve
- 31: first control port
- 32: second control port
- 40: compressor
- 50: receiving unit
- 50a: pneumatic unit
- 51: compressed air buffer
- 52: pneumatic braking unit
- 53: compressed air line
- 60: pneumatic system
- 70: vehicle
- 70a: commercial vehicle
- 71: towing unit
- 72: trailer unit
- CS: closed state
- OS: open state
- CCS: compressor-connecting state
- CDS: compressor-disconnecting state

## Claims

1. A vehicular air drying unit (10) for drying compressed air in a vehicle (70), in particular in a commercial vehicle (70a), the vehicular air drying unit (10) comprising:
- a compressor port (11) for receiving compressed air from a compressor (40),
- a supply port (12) for providing dried compressed air to a receiving unit (50),
- a regeneration port (13) for receiving regeneration air,
- an exhaust (14) for venting humidified regeneration air,
- an air drying device (20) comprising a desiccant, wherein the air drying device (20)
∘ is operable in a drying mode for drying the received compressed air and in a regeneration mode for regenerating the desiccant with the received regeneration air,
∘ comprises an input port (21) pneumatically connected or connectable with the compressor port (11) via a compressor line (11a) in the drying mode and pneumatically connected or connectable with the exhaust (14) via an exhaust line (14a) in the regeneration mode,
∘ comprises an output port (22) pneumatically connected or connectable with the supply port (12) via a supply line (12a) in the drying mode and pneumatically connected or connectable with the regeneration port (13) via a regeneration line (13a) in the regeneration mode,
- a purge valve (30) configured to selectively connect at least one of the input port (21) and the compressor port (11) with the exhaust (14) upon actuation of the purge valve (30), wherein the purge valve (30) comprises a first control port (31) configured to be controlled in coordination with an operating status of the compressor (40) and a second control port (32) configured to be controlled in coordination with the regeneration mode.

2. The vehicular air drying unit (10) according to claim 1, wherein at least one of the first control port (31) and the second control port (32) is configured as a pneumatically operated control port.

3. The vehicular air drying unit (10) according to claim 1 or 2, wherein
- the vehicular air drying unit (10) comprises a compressor signal port (15) for receiving a compressor signal from a compressor control line (16) and wherein the first control port (31) of the purge valve (30) is connected to the compressor signal port (15) via a compressor signal line (15a)
and/or
- wherein the second control port (32) is connected to the regeneration port (13) via the regeneration line (13a).

4. The vehicular air drying unit (10) according to any preceding claim, wherein the vehicular air drying unit (10) comprises
- a first control valve for controlling the first control port (31), the first control valve being configured to be actuated by a compressor control signal
and/or
- a second control valve connected to the second control port (32), wherein the second control valve is configured to be actuated by a regeneration signal.

5. The vehicular air drying unit (10) according to any preceding claim, wherein the purge valve (30) is configured to be actuated when the second control port (32) is activated.

6. The vehicular air drying unit (10) according to any preceding claim, wherein the purge valve (30) is configured to remain in an actuated state when the first control port (31) is activated.

7. The vehicular air drying unit (10) according to claim 6, wherein the purge valve (30) is configured to be reset when the first control port (31) is deactivated.

8. The vehicular air drying unit (10) according to any preceding claim, wherein the purge valve (30) is configured to be reset only when the first control port (31) and the second control port (32) are deactivated.

9. The vehicular air drying unit (10) according to any preceding claim, wherein the purge valve (30) is arranged in the exhaust line (14a) and wherein the purge valve (30) comprises a closed state (CS), in which it is configured to interrupt the exhaust line (14a), and an open state (OS), in which it is configured to connect at least one of the compressor line (11a) and the input port (21) of the air drying device (20) with the exhaust (14).

10. The vehicular air drying unit (10) according to claim 9, wherein the purge valve (30) is configured as a pneumatically operated 2/2 way valve.

11. The vehicular air drying unit (10) according to any one of claims 1 to 8, wherein the purge valve (30) is arranged in the compressor line (11a) and wherein the purge valve (30) comprises a compressor-connecting state (CCS), in which it is configured to connect the compressor line (11a) with the input port (21) of the air drying device (20), and a compressor-disconnecting state (CDS), in which it is configured to disconnect the compressor line (11a) from the input port (21) of the air drying device (20) and to connect the input port (21) of the air drying device (20) with the exhaust (14).

12. The vehicular air drying unit (10) according to claim 11, wherein the purge valve (30) is configured as a pneumatically operated 3/2 way valve.

13. A pneumatic system (60) for a vehicle (70), comprising:
- a compressor (40) providing compressed air,
- a vehicular air drying unit (10) according to any of the preceding claims 1 to 12, wherein the vehicular air drying unit (10) is connected or connectable to the compressor (40) via the compressor port (11), and
- at least one pneumatic unit (50a) connected or connectable to the vehicular air drying unit (10) via the supply port (12) of the vehicular air drying unit (10).

14. A vehicle (70), in particular a commercial vehicle (70a), comprising a pneumatic system (60) according to claim 13.

15. The vehicle (70) according to claim 14, wherein the at least one pneumatic unit (50a) of the pneumatic system (60) is configured as a pneumatic braking unit, an air suspension unit or a tire-inflation unit.
